(19)

Europäisches
Patentamt

European
Patent Office

Office européen
des brevets

(11)  EP 3 246 630 A1

(12)  EUROPEAN PATENT APPLICATION

(43) Date of publication:
22.11.2017  Bulletin 2017/47

(51) Int Cl.:
F23R 3/26 (2006.01)      F23R 3/28 (2006.01)

(21) Application number: 17166494.9

(22) Date of filing: 13.04.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority:  18.04.2016  US 201662323910 P
04.04.2017  US 201715478257

(71) Applicant: Dresser Rand Company
Olean, NY 14760 (US)

(72) Inventors:
• EDMONDS, Ryan G.
Renton, WA Washington 98059 (US)
• SARETTO, Silvano R.
Snoqualmie, WA Washington 98065 (US)
• SRINIVASAN, Ravichandra
Renton, WA Washington 98059 (US)

(74) Representative: Isarpatent
Patent- und Rechtsanwälte Behnisch Barth
Charles
Hassa Peckmann & Partner mbB
Friedrichstrasse 31
80801 München (DE)

(54)  SINGLE CAN VORTEX COMBUSTOR

(57)    A combustor (100) includes a housing (10) and a liner (15) that define an inlet (20) configured to receive an inlet fluid. An inlet splitter (25) is disposed in the inlet which splits the inlet into a first annulus (40) and a second annulus (45). A fuel supply system (70) selectively injects fuel into the first annulus and the second annulus, and a centerbody (90) that includes a plurality of struts (95) radially extending from a central hub (105) receives the inlet fluid mixed with fuel, thereby creating fluid swirl.

**FIG. 1B**

## Description

### Cross Reference to Related Applications

This application claims the benefit of U.S. Provisional Patent Application having Serial No. 62/323,910, which was filed April 18, 2016. The aforementioned patent application is hereby incorporated by reference in its entirety into the present application to the extent consistent with the present application.

### Background

Gas turbine engines for use in power generation plants generally include a compressor, a combustor, and a turbine. The compressor may provide compressed air to a combustor, and the combustor may burn fuel in the presence of the compressed air to produce a hot gas. As the hot gas exits the combustor, the hot gas may enter the turbine which expands the hot gas and extracts shaft power.

Combustors may greatly contribute to the efficiency of a gas turbine engine. Generally, it is desirable for a combustor to produce lower emissions upon combusting fuel. It is also desirable to design a combustor that can adapt to the change of speed of inlet fluid, such as air, entering the combustor and/or change operating parameters based on the desired exhaust temperature of the hot gas that will enter the turbine of a gas turbine engine. For example, in order to control emissions and control exhaust temperature, combustors may inject a fuel into the compressed air stream at an inlet of the combustor based on the relative speed of the compressed air entering the inlet. The metered fuel injection may allow the ratio of fuel to compressed air to be reduced, which in turn may allow for the reduction of emissions, as well as lower the exhaust temperature when the fuel is combusted. However, combustors must still provide a sufficient amount of fuel so that combustion will occur and not "flame out," while ensuring that a certain exhaust temperature is achieved. Accordingly, combustors may use a large amount of fuel to ensure proper combustion, which may result in high-level emissions, especially nitrogen oxide ($NO_x$) emissions. Because of this, combustors have not been able to greatly alter or throttle the exhaust temperature range of the hot gas exiting the combustor. Further, when combustors turndown from full power to an idled state, the emissions may be high during the idled state. Therefore, the combustors and gas turbine engines have had a small turndown capability while maintaining low emissions.

Combustors also contribute to the efficiency of Compressed Air Energy Storage ("CAES") systems. In CAES systems, the ability for combustors to turndown from full power to an idled state greatly contributes to the efficiency of the system. However, current configurations of combustors may have difficulty achieving a large turndown range.

What is needed, then, is a combustor capable of producing low level emissions while having a large turndown capability.

### Summary

Embodiments of the disclosure may provide a combustor. The combustor may comprise a housing that may further comprise an inner surface. The combustor may further comprise a liner disposed within the housing. The liner may include an outer surface, wherein the inner surface of the housing and the outer surface of the liner may define an inlet configured to receive an inlet fluid. The combustor may comprise an inlet splitter disposed in the inlet and may comprise a first face and a second face, wherein the first face and the housing define a first annulus and the second face and the liner define a second annulus. A fuel supply system may be circumferentially disposed about the housing and configured to selectively inject fuel into the first annulus and the second annulus. The fuel supply system may comprise a portion of a first fuel spoke disposed within the first annulus, and a portion of a second fuel spoke disposed within the second annulus. The combustor may further include a centerbody disposed radially inward within the housing of the combustor and axially spaced from an end of the combustor. The centerbody may comprise a plurality of struts radially extending from a central hub comprising a longitudinal axis. The centerbody may be configured to receive an axial flow of the inlet fluid and the fuel and may be configured to create fluid swirl.

Embodiments of the disclosure may further provide a combustor. The combustor may comprise a housing comprising an inner surface and a liner disposed therein and comprising an outer surface that define an inlet configured to receive an inlet fluid. An inlet splitter may be disposed within the inlet, and the inlet splitter may be configured to divide the inlet into a first annulus and a second annulus. A fuel supply system may be circumferentially disposed about the housing of the combustor and may be configured to selectively inject fuel into the first and the second annulus. The combustor may further include a combustor can positioned downstream of the inlet and defined by an inner surface of the liner. The combustor can may be fluidly coupled to the inlet and configured to combust the fuel mixed with the inlet fluid to produce a hot gas.

Embodiments of the disclosure may further provide a method of operating a combustor. The method may comprise positioning an inlet splitter within an inlet of the combustor, the inlet defined by an inner surface of a housing of the combustor and an outer surface of a liner positioned therein. The inlet splitter may divide the inlet of the combustor into a first annulus and a second annulus. The method may further include receiving an inlet fluid into the first annulus and the second annulus, and selectively injecting fuel into the first annulus. The method may include swirling the flow of inlet fluid and the fuel by a centerbody positioned downstream of the inlet. The centerbody may comprise struts radially positioned about a central hub. The method may further include combusting the fuel mixed with the inlet fluid in a combustor can to produce a hot gas at a desired exhaust temperature, the combustor can defined by an inner surface of the liner and axially positioned downstream of the centerbody.

**Brief Description of the Drawings**

It is to be understood that the following disclosure describes several exemplary embodiments for implementing different features, structures, or functions of the invention. Exemplary embodiments of components, arrangements, and configurations are described below to simplify the present disclosure; however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the various Figures. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact. Finally, the exemplary embodiments presented below may be combined in any combination of ways, *i.e.*, any element from one exemplary embodiment may be used in any other exemplary embodiment, without departing from the scope of the disclosure.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Further, the naming convention used herein is not intended to distinguish between components that differ in name but not function. Additionally, in the following discussion and in the claims, the terms "including" and "comprising" are used in an open-ended fashion, and thus should be interpreted to mean "including, but not limited to." All numerical values in this disclosure may be exact or approximate values unless otherwise specifically stated. Accordingly, various embodiments of the disclosure may deviate from the numbers, values, and ranges disclosed herein without departing from the intended scope. Furthermore, as it is used in the claims or specification, the term "or" is intended to encompass both exclusive and inclusive cases, *i.e.*, "A or B" is intended to be synonymous with "at least one of A and B," unless otherwise expressly specified herein.

Figure 1A illustrates a partially sectioned perspective view of a combustor, according to one or more embodiments.

Figure 1B illustrates an enlarged view of a portion 1B of the perspective view of the combustor, as shown in Figure 1A, according to one or more embodiments.

Figure 2 illustrates a perspective view of a portion of a fuel supply system for use in a combustor, according to one or more embodiments.

Figure 3 illustrates a perspective view of a centerbody for use in a combustor, according to one or more embodiments.

Figure 4 illustrates a flowchart of a method for operating a combustor, according to one or more embodiments.

**Detailed Description**

The present disclosure is best understood from the following detailed description when read with the accompanying Figures. It is emphasized that, in accordance with the standard practice in the industry, various features are not drawn to scale. In fact, the dimensions of the various features may be arbitrarily increased or reduced for clarity of discussion.

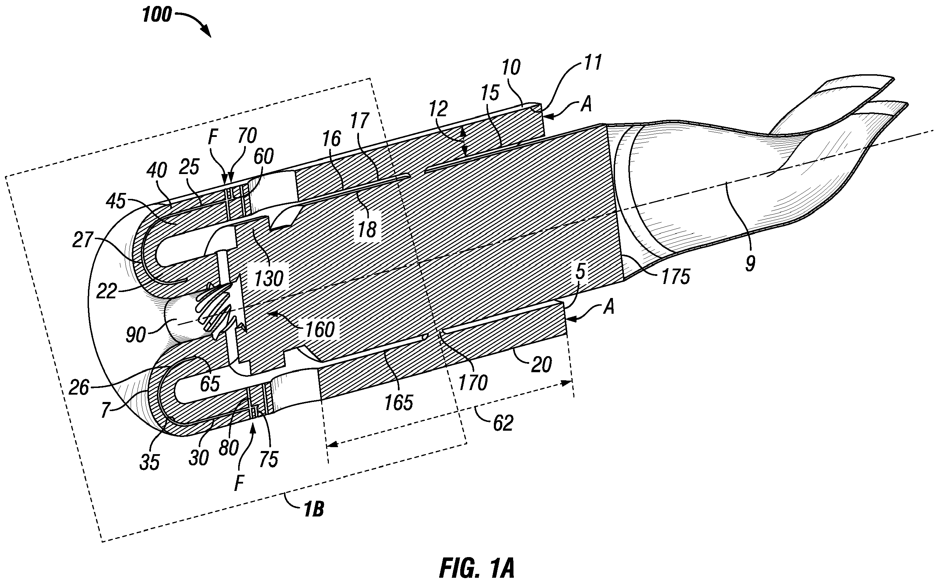

Figure 1A shows a partially sectioned perspective view of a combustor 100 for use in a gas turbine engine or in a compressed air energy storage ("CAES") system, according to one or more embodiments disclosed herein. The combustor 100 may receive an inlet fluid, such as compressed air A, from a compressor (not shown) of the gas turbine engine or CAES system. The combustor 100 may introduce a fuel F into the inlet fluid A and combust the fuel to produce a hot gas, which in turn exits the combustor 100 and enters a turbine (not shown) of the gas turbine engine. For example, the combustor 100 may introduce natural gas, syngas, or other types of gaseous or liquid fuels into the inlet fluid A.

The combustor 100 may include a generally cylindrical housing 10 that extends along a longitudinal axis 9 from a first end 5 of the combustor 100 to a second end 7 of the combustor. The housing 10 may include an inner surface 11. A liner 15 may be disposed within the housing 10 of the combustor, and may include an outer surface 16 and an inner surface 18. The inner surface 11 of the housing 10 and the outer surface 16 of the liner 15 may define an inlet 20 of the combustor 100, which is configured to receive the inlet fluid from the compressor or CAES system. The liner 15 may include a substantially straight portion 17 that is positioned at a width 12 from the housing 10. The liner 15 may also include a curved portion 22 that is configured to reverse the axial flow of fluid through the inlet 20 of the combustor 100. The curved portion 22 of the liner may be disposed adjacent the second end 7 of the combustor 100. While the inlet 20 may extend from the first end 5 of the combustor 100 to the second end 7 of the combustor, following the curved portion 22 of the liner 15, the inlet 20 may continue until the liner 15 reaches a centerbody 90, as will be discussed herein. It is also contemplated that the combustor 100 may include alternative combustor types such as an axial inflow-type combustor, can-type combustor, or an annular combustor where fluid flow is not reversed.

An inlet splitter 25 may be disposed within the inlet 20 between the housing 10 and the liner 15, and may include a first face 30 and a second face 35. The inlet splitter 25 may be positioned to divide the inlet 20 into a first annulus 40 and a second annulus 45, wherein the first annulus 40 is defined as the area between the first face 30 of the inlet splitter 25 and the housing 10 of the combustor 100, and the second annulus 45 is defined as the area between the second face 35 of the inlet splitter 25 and the liner 15 of the combustor.

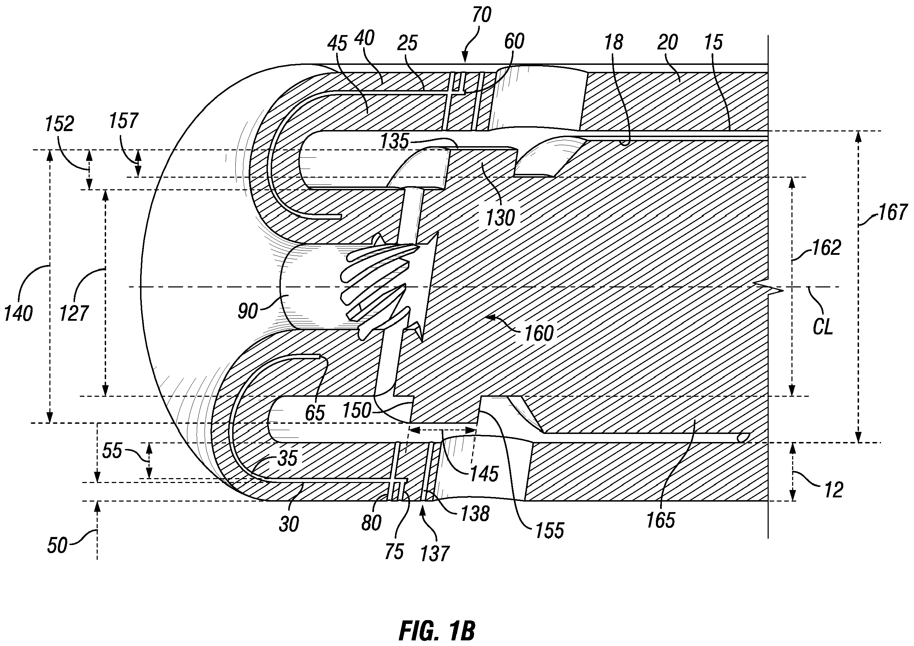

Figure 1B illustrates an enlarged view of a portion 1B of the combustor 100, which more clearly shows a view of the inlet splitter 25, according to one or more embodiments. The inlet splitter 25 may be disposed within the inlet 20 of the combustor 100 at a first distance 50 from the housing 10, and a second distance 55 from the liner 15. In one embodiment, the first distance 50 may be equal to the second distance 55, and the first annulus 40 and the second annulus 45 may have approximately the same cross-sectional area. In another embodiment, the first distance 50 may be different from the second distance 55, where the first annulus 40 and the second annulus 45 have a different cross-sectional area. For example, in one exemplary embodiment, the first distance 50 of the inlet splitter 25 from the housing 10 may be equal to forty percent of the width 12 of the inlet 20, and the second distance 55 may be equal to sixty percent of the width 12 of the inlet 20. However, other first and second distances 50, 55 of the inlet splitter 25 from the housing 10 and liner 15, respectively, are contemplated. It is further contemplated that the first and second distances 50, 55 of the inlet splitter 25 may change along the longitudinal axis 9 of the combustor 100.

As shown in Figure 1A, the inlet splitter 25 may include a first end 60 and a second end 65 that is disposed within the inlet 20 of the combustor 100. The first end 60 of the inlet splitter may be axially disposed at a distance 62 from the first end 5 of the combustor. In one embodiment, the first end 60 of the inlet splitter 25 and the first end 5 of the combustor 100 may be the same. The inlet splitter 25 may include a straight portion 26 and a curved portion 27 which mirrors the straight portion 17 and the curved portion 22 of the liner 15 of the combustor 100. Like the curved portion 22 of the liner 15, the curved portion 27 of the inlet splitter 25 may cause the axial flow of fluid traveling through the inlet 20 (and the first annulus 40 and the second annulus 45) to be reversed. In other words, at the first end 60 of the inlet splitter 25, the fluid may have an axial flow in a first direction, and at the second end 65 of the inlet splitter 25, the fluid may have an axial flow in a second direction, which is opposite from the first direction. In the case of an axial inflow-type combustor or an annular combustor can-type combustor, the inlet splitter 25 may not include a curved portion 22 and reverse the direction of the fluid flow. The inlet splitter 25 may extend along the length of the liner 15, as shown, until the inlet 20, and the second end 65 of the inlet splitter 25 reaches the centerbody 90 of the combustor 100. It is also contemplated that the inlet splitter 25 may terminate at a distance before reaching the centerbody 90, or proceed into the centerbody 90.

A fuel supply system 70 may be circumferentially disposed about the housing 10 of the combustor 100, and may be configured to inject fuel (F) into the inlet 20 of the combustor 100. In one embodiment, the fuel supply system 70 may be configured to selectively inject the fuel into the first annulus 40 and the second annulus 45 of the inlet 20. The fuel supply system 70 may include a first fuel spoke 75 that extends into the first annulus 40, and a second fuel spoke 80 that extends into both the first annulus 40 and the second annulus 45. Alternatively, the second fuel spoke 80 may extend into only the second annulus 45. The first fuel spoke 75 and the second fuel spoke 80 may provide a flowpath that allows the fuel to be injected into the first and second annuli 40, 45. In one embodiment, the fuel supply system 70 may be configured to selectively inject an amount of the fuel into the first and second annuli 40, 45 based on the rate of inlet fluid entering the inlet 20 of the combustor 100. The fuel supply system 70 may also be configured to selectively inject an amount of the fuel into the first and second annuli 40, 45 based on the desired exhaust temperature of the hot gas to be produced by the combustor 100.

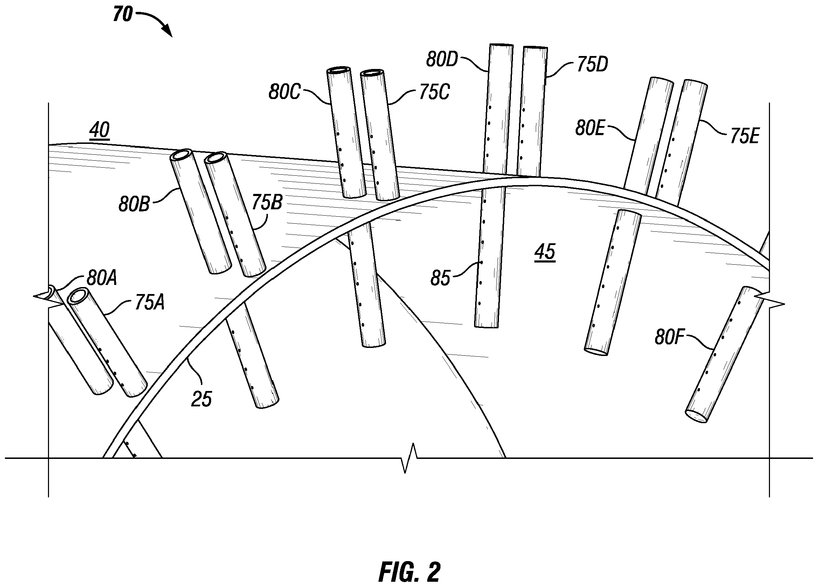

As shown in Figure 2, the fuel supply system 70 may include a plurality of first fuel spokes 75 A-E and a plurality of second fuel spokes 80 A-F that are circumferentially disposed about the inlet splitter 25. The first fuel spokes 75 A-E may extend solely into the first annulus 40, while the second fuel spokes 80 A-F may extend into both the first and second annuli 40, 45. A plurality of fuel injection holes 85 may be disposed along or about the first fuel spokes 75 A-E and the second fuel spokes 80 A-F, and the fuel injection holes 85 may be through holes that are configured to allow the fuel to be injected into the first and/or second annuli 40, 45. For example, in one embodiment, the fuel supply system 70 may be configured to inject the fuel into only the first annulus 40 by injecting the fuel into only the first fuel spokes 75 A-E. When the fuel system 70 only injects the fuel into the first annulus 40, stratification between premix fuel (fuel mixed with inlet fluid) and the inlet fluid occurs. The stratification of the combustor 100 fluids creates smaller regions of flammable mixture within the combustor 100.

Accordingly, when the smaller regions of flammable mixture are combusted in the combustor 100 producing a hot gas, the exhaust temperature of the hot gas is reduced, and the amount of emissions is reduced. However, when a higher exhaust temperature is desired from the combustor 100, the fuel supply system 70 may be configured to inject the fuel into both the first annulus 40 and the second annulus 45 by injecting the fuel into the second fuel spokes 80 A-F or both the first and the second fuel spokes 75 A-E, 80 A-F. As a result, the first and the second annuli 40, 45 contain premix fuel, thereby resulting in a large region of flammable mixture within the combustor 100. The large region of flammable mixture produces hot gas with a greater exhaust temperature. Therefore, the combustor 100 has the ability to easily throttle between high and low exhaust temperatures by selectively injecting the fuel into the first or the second annulus 40,45.

It is contemplated that many types of combustor inflow stratification could be accomplished in a variety of ways. For example, a plurality of inlet splitters 25 may be disposed within the inlet 20, thereby creating more than two annuli within the combustor inlet 20. In such configuration, the fuel supply system 70 may include fuel spokes circumferentially disposed about the inlet splitters 25 and configured to selectively inject the fuel into any combination of annuli. Further, while the fuel supply system 70 may inject into the first annulus 40 only, thereby creating premix in the first annulus 40 only, it is also contemplated that the fuel supply system 70 may be configured to solely inject into the second annulus 45, thereby creating premix in the second annulus 45 only.

After the inlet fluid is stratified in the combustor 100 by the inlet splitter 25, and the fuel is injected into one or more of the annuli 40, 45 by the fuel system 70, the premix fuel and/or the inlet fluid may flow toward the centerbody 90, as shown in Figures 1A and 1B. The centerbody 90 may be disposed radially inward from the housing 10 of the combustor 100 and may be positioned at an end of the inlet 20 and at the second end 65 of the inlet splitter 25. The centerbody 90 may be disposed adjacent to the second end 7 of the combustor 100.

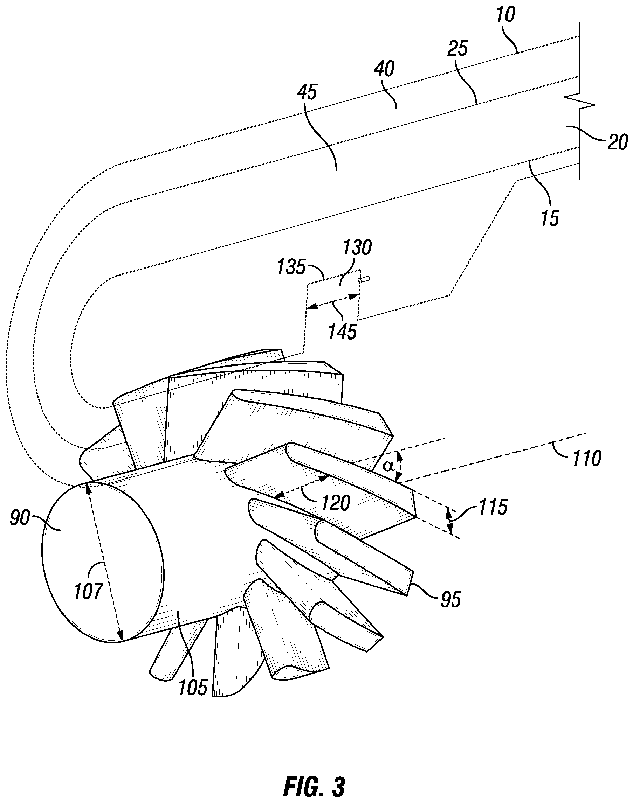

Figure 3 shows a perspective view of the centerbody 90, according to one or more embodiments disclosed herein. The centerbody 90 may include a central hub 105 with a longitudinal axis 110 and a diameter 107. In one embodiment, the longitudinal axis 110 of the centerbody 90 may be aligned with the longitudinal axis 9 (shown in Figure 1A) of the combustor 100. The centerbody 90 may include a plurality of struts 95 that radially extend from the central hub 105. The struts 95 may extend into the inlet 20 of the combustor 100, and the struts 95 may have a thickness 115 and a length 120, and may be positioned at an angle $\alpha$ from the longitudinal axis 110 of the central hub 105. The struts 95 may include a significant thickness 115 at a trailing edge of the struts 95 that is unlike typical airfoil shapes used in swirl stabilized combustors to facilitate such swirl. In one embodiment, the thickness 115 of the struts 95 may be between 0.25 inches and 0.75 inches or greater, depending on the size of the combustor 100. The angle $\alpha$ of the struts may be between about zero and about sixty-five degrees relative to the longitudinal axis 110. In one embodiment, the struts 95 may extend partially into the inlet 20, and in another embodiment, the struts 95 may extend radially from the central hub 105 to the liner 15 of the inlet 20. In another embodiment, the centerbody 90 may not include a central hub 105 and instead may include struts 95 that radially extend from the inner surface 18 of the liner 15 towards the centerline or the longitudinal axis 110 of the combustor 100. The fluids flowing through the centerbody 90 may exit the centerbody 90 with a swirling flow pattern.

After the premix fuel exits the centerbody 90, the premix fuel enters a cavity 130 that is disposed within the housing 10 and disposed radially inward from the inner surface 18 of the liner 15 of the combustor 100. The cavity 130 may be fluidly coupled to the inlet 20. A portion of the inner surface 18 of the liner 15 may form an outer cavity wall 135 that defines the cavity 130, as shown in Figure 1B. The cavity 130 may include a diameter 140 and have a cavity length 145. The cavity 130 may further include a first cavity wall 150 and a second cavity wall 155 defined by the liner 15. The first cavity wall 150 may include a width 152, and the second cavity wall 155 may include a width 157. In one embodiment, the width 157 of the second cavity wall 155 may be equal to 0.73 multiplied by first cavity wall width 152. In another embodiment the first and second cavity wall may be equal. In one embodiment, the cavity 130 may be a ring area disposed radially inward from the inner surface of the liner 15 of the combustor and disposed downstream from the centerbody 90. In such embodiment, an outer diameter of the ring area is defined by the outer cavity wall 135, an inner diameter of the ring area is positioned at about the width 152 from the outer cavity wall 135, and the ring area has a thickness of the cavity length 145.

A secondary fuel supply system 137 may include a plurality of orifices 138 that may be circumferentially disposed about the combustor 100, and more specifically about the housing 10 and the liner 15. The secondary fuel system 137 may inject fuel or premix fuel into the cavity 130 and may further include an ignitor to combust the premix fuel within the cavity 130. The cavity 130 may further act as a vortex pilot region, and may provide a stable shielded premixed pilot flame zone that enhances the operating limits of the main flow of the combustor 100 in comparison to a swirl stabilized only combustor. In addition, because of the stratification of the premix fuel and inlet fluid that is swirled by the centerbody 90, the premix fuel may enter the cavity 130 with smaller regions of flammable mixture (the stratified portion with premix fuel), which further stabilizes the premixed pilot flame zone to enhance the operating limits of the combustor 100. The potential smaller regions of flammable mixture entering into the centerbody 90 and the cavity 130 may result in lower combustor 100 exhaust temperature and lower the amount of pollutant emissions.

In a preferred embodiment, the cavity length 145 may be varied based on the angle $\alpha$ of the struts 95, which are shown in Figure 3. Specifically, the cavity length 145 is determined by the following equation:

$$L = XW,$$

wherein L is the cavity length 145, W is two multiplied by the cavity width 152, and X is a length multiplier. The length multiplier may be a value between 0.42 and 0.59.

After the premix fuel exits the cavity 130, the premix fuel may enter into a neck region 160 defined by the liner 15. The neck region 160 may have a neck diameter 162 approximately equal to the cavity diameter 140 minus two multiplied by the width 157 of the second cavity wall 155. Following the neck region 160, the premix fuel may enter a combustor can 165 defined by the inner surface 18 of the liner 15. The combustor can 165 may include a combustor can diameter 167. In one embodiment, the combustor can 165 may be configured to combust the premix fuel thereby producing a hot gas for use in the turbine of the gas turbine engine. The combustor can 165 may include one or more dilution holes 170 disposed circumferentially about the liner 15, as shown in Figure 1A, which may be axially positioned downstream from the area of combustion within the combustor can 165. The dilution holes 170 may allow inlet fluid from the inlet 20 of the combustor 100 to enter the combustor can 165 post-combustion in order to reduce the exhaust temperature of the hot gas. After combustion, the hot gas may exit a combustor outlet 175.

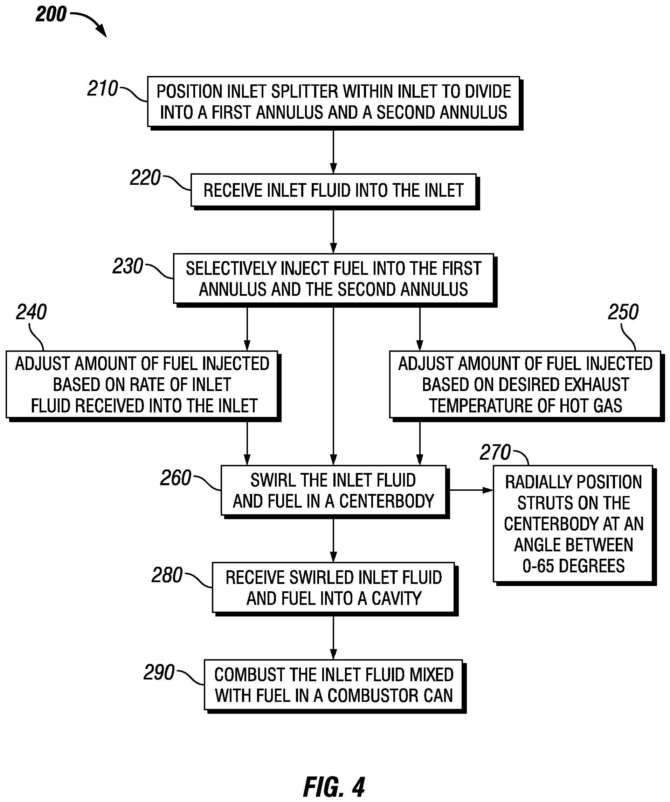

Turning now to Figure 4, with continued reference to Figures 1-3, a flowchart is provided of an illustrative method 200 for operating a combustor 100, according to one or more embodiments disclosed. The method 200 may include positioning an inlet splitter 25 within an inlet 20 of the combustor, thereby dividing the inlet 20 of the combustor 100 into a first annulus 40 and a second annulus 45, as at 210. The method 200 may include receiving an inlet fluid into the inlet 20 and into the first annulus 40 and the second annulus 45, as at 220. The method 200 may include selectively injecting fuel into the first annulus 40 and the second annulus by a fuel system 70, as at 230. In one embodiment, the fuel system 70 may adjust the amount of fuel provided to the first annulus 40 and the second annulus 45 based on a rate of inlet fluid received into the first annulus 40 and the second annulus 45, as at 240. The fuel system 70 may also adjust the amount of fuel provided to the first annulus 40 and the second annulus 45 based on a desired exhaust temperature of hot gas to exit the combustor 100, as at 250. The method 200 may further include swirling the inlet fluid and the fuel by a centerbody 90 positioned downstream of the inlet 20, as at 260. In one embodiment, a plurality of struts 95 radially positioned about a central hub 105 of the centerbody 90 may be positioned at an angle between zero and sixty-five degrees relative to a longitudinal axis 110 of the central hub 105, as in 270. The method 200 may include receiving the swirled inlet fluid and fuel into a cavity 130, which is fluidly coupled with the inlet 20, as at 280. The method 200 may further include combusting the inlet fluid mixed with fuel in a combustor can 165 positioned downstream of the cavity 130, which thereby produces a hot gas for use by a turbine or a CAES system, as at 290.

It should be appreciated that all numerical values and ranges disclosed herein are approximate valves and ranges, whether "about" is used in conjunction therewith. It should also be appreciated that the term "about," as used herein, in conjunction with a numeral refers to a value that is +/- 5% (inclusive) of that numeral, +/- 10% (inclusive) of that numeral, or +/- 15% (inclusive) of that numeral. It should further be appreciated that when a numerical range is disclosed herein, any numerical value falling within the range is also specifically disclosed.

The foregoing has outlined features of several embodiments so that those skilled in the art may better understand the present disclosure. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions and alterations herein without departing from the spirit and scope of the present disclosure.

**Claims**

1. A combustor, comprising:

a housing comprising an inner surface;
a liner disposed within the housing comprising an outer surface, wherein the inner surface of the housing and the outer surface of the liner define an inlet configured to receive an inlet fluid;
an inlet splitter disposed in the inlet and comprising a first face and a second face, wherein the first face and the housing define a first annulus and the second face and the liner define a second annulus;
a fuel supply system circumferentially disposed about the housing and configured to selectively inject fuel into the first annulus and the second annulus, the fuel supply system comprising:

a portion of a first fuel spoke disposed within the first annulus, and
a portion of a second fuel spoke disposed within the second annulus; and

a centerbody disposed radially inward within the housing of the combustor and axially spaced from an end of the combustor, the centerbody comprising a plurality of struts radially extending from a central hub comprising a longitudinal axis, the centerbody configured to receive an axial flow of the inlet fluid and the fuel and configured to create fluid swirl.

2. The combustor of claim 1, wherein the fuel supply system comprises a plurality of inlet splitters.

3. The combustor according to any of the preceding claims, wherein the inlet splitter comprises a curved portion configured to reverse the axial flow of the inlet fluid and the fuel prior to reaching the centerbody.

4. The combustor according to any of the preceding claims, wherein the plurality of struts are positioned at an angle $\alpha$ relative to the longitudinal axis of the central hub, wherein the angle $\alpha$ of the struts is in particular between about zero and about sixty-five degrees relative to the longitudinal axis of the central hub.

5. The combustor according to any of the preceding claims, wherein the liner comprises a portion downstream of the centerbody that forms an outer cavity wall defining a cavity disposed radially inward from the liner, the cavity comprising a cavity diameter.

6. The combustor of claim 5, further comprising a secondary fuel system that comprises a plurality of orifices circumferentially disposed about the combustor and configured to inject fuel into the cavity.

7. The combustor of claim 5 or 6, wherein the secondary fuel system further comprises an ignitor that is configured to combust the fuel in the cavity.

8. The combustor of any of the claims 5 to 7, further comprising a combustor can that is defined by an inner surface of the liner and positioned downstream of the cavity, the combustor can fluidly coupled to the cavity and configured to combust the fuel.

9. A combustor, comprising:

a housing comprising an inner surface and a liner disposed therein and comprising an outer surface that define an inlet configured to receive an inlet fluid;
an inlet splitter disposed within the inlet, the inlet splitter configured to divide the inlet into a first annulus and a second annulus;
a fuel supply system circumferentially disposed about the housing of the combustor and configured to selectively inject fuel into the first and the second annulus; and
a combustor can positioned downstream of the inlet and defined by an inner surface of the liner, the combustor can fluidly coupled to the inlet and configured to combust the fuel mixed with the inlet fluid to produce a hot gas.

10. The combustor of claim 9, further comprising a centerbody axially positioned between the inlet and the combustor can, the centerbody configured to receive and swirl the inlet fluid and the fuel.

11. The combustor of claim 9 or 10, wherein the fuel supply system of the combustor is configured to adjust an amount of fuel injected into the first and the second annulus based on a rate of inlet fluid entering the inlet, in particular wherein the fuel supply system of the combustor is configured to adjust the amount of fuel injected into the first and the second annulus based on a desired temperature of the hot gas exiting the combustor.

12. The combustor of any of the claims 9 to 11, wherein the fuel supply system is configured to inject the fuel into the first annulus.

13. The combustor of any of the claims 9 to 12, wherein the fuel supply system is configured to inject the fuel into the first annulus and the second annulus.

14. A method of operating a combustor, the method comprising:

positioning an inlet splitter within an inlet of the combustor, the inlet defined by an inner surface of a housing of the combustor and an outer surface of a liner positioned therein, the inlet splitter dividing the inlet of the combustor into a first annulus and a second annulus;
receiving an inlet fluid into the first annulus and the second annulus;
selectively injecting fuel into the first annulus;
swirling the flow of inlet fluid and the fuel by a centerbody positioned downstream of the inlet, the centerbody comprising struts radially positioned about a central hub; and
combusting the fuel mixed with the inlet fluid in a combustor can to produce a hot gas at a desired exhaust temperature, the combustor can defined by an inner surface of the liner and axially positioned downstream of the centerbody.

15. The method of claim 14, further comprising:

selectively injecting fuel into the second annulus, or
positioning the struts at an angle between about

**EP 3 246 630 A1**

zero and about sixty-five degrees relative to a longitudinal axis of the central hub, or receiving the swirled fuel and the inlet fluid into a cavity defined by a portion of the liner and radially disposed inward from the liner, or adjusting the amount of fuel provided to the first annulus and the second annulus based on a rate of inlet fluid received into the first annulus and the second annulus.

**FIG. 1A**

EP 3 246 630 A1

FIG. 1B

**FIG. 2**

**FIG. 3**

*200*

**210** — POSITION INLET SPLITTER WITHIN INLET TO DIVIDE INTO A FIRST ANNULUS AND A SECOND ANNULUS

**220** — RECEIVE INLET FLUID INTO THE INLET

**230** — SELECTIVELY INJECT FUEL INTO THE FIRST ANNULUS AND THE SECOND ANNULUS

**240** — ADJUST AMOUNT OF FUEL INJECTED BASED ON RATE OF INLET FLUID RECEIVED INTO THE INLET

**250** — ADJUST AMOUNT OF FUEL INJECTED BASED ON DESIRED EXHAUST TEMPERATURE OF HOT GAS

**260** — SWIRL THE INLET FLUID AND FUEL IN A CENTERBODY

**270** — RADIALLY POSITION STRUTS ON THE CENTERBODY AT AN ANGLE BETWEEN 0-65 DEGREES

**280** — RECEIVE SWIRLED INLET FLUID AND FUEL INTO A CAVITY

**290** — COMBUST THE INLET FLUID MIXED WITH FUEL IN A COMBUSTOR CAN

**FIG. 4**

Europäisches
Patentamt

European
Patent Office

Office européen
des brevets

# EUROPEAN SEARCH REPORT

Application Number

EP 17 16 6494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 077076 A (MITSUBISHI HEAVY IND LTD) 11 March 2004 (2004-03-11) | 9-13 | INV. F23R3/26 |
| Y | * claim 1; figures 1, 3, 4 * | 1-8,14, 15 | F23R3/28 |
| Y | US 4 112 676 A (DECORSO SERAFINO M) 12 September 1978 (1978-09-12) * column 4, lines 55-59; figure 1 * | 1-3,14, 15 | |
| Y | EP 1 371 906 A2 (GEN ELECTRIC [US]) 17 December 2003 (2003-12-17) * claim 1; figures 1, 2 * | 5-8 | |
| Y | US 2010/077759 A1 (SINGH ARJUN [IN] ET AL) 1 April 2010 (2010-04-01) * figure 3 * | 4,15 | |
| Y | EP 1 010 945 A2 (GEN ELECTRIC [US]) 21 June 2000 (2000-06-21) * figure 1 * | 7 | |
| A | CN 104 315 541 A (BEIJING HUAQING GAS TURBINE & INTEGRATED GASIFICATION COMBINED CYCLE E) 28 January 2015 (2015-01-28) * figure 1 * | 1,4,9,15 | **TECHNICAL FIELDS SEARCHED (IPC)** F23R F02C |

The present search report has been drawn up for all claims

| Place of search | Date of completion of the search | Examiner |
|---|---|---|
| The Hague | 3 October 2017 | Nicolas, Pascal |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 17 16 6494

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2017

| Patent document cited in search report | | Publication date | Patent family member(s) | | Publication date |
|---|---|---|---|---|---|
| JP 2004077076 | A | 11-03-2004 | NONE | | |
| US 4112676 | A | 12-09-1978 | AR | 212573 A1 | 31-07-1978 |
| | | | CA | 1071417 A | 12-02-1980 |
| | | | IT | 1093471 B | 19-07-1985 |
| | | | JP | S5755974 B2 | 27-11-1982 |
| | | | JP | S53123712 A | 28-10-1978 |
| | | | US | 4112676 A | 12-09-1978 |
| EP 1371906 | A2 | 17-12-2003 | CN | 1467407 A | 14-01-2004 |
| | | | CN | 102175043 A | 07-09-2011 |
| | | | EP | 1371906 A2 | 17-12-2003 |
| | | | JP | 4441193 B2 | 31-03-2010 |
| | | | JP | 2004012123 A | 15-01-2004 |
| | | | US | 2004103663 A1 | 03-06-2004 |
| | | | US | 2005034458 A1 | 17-02-2005 |
| US 2010077759 | A1 | 01-04-2010 | CN | 101713548 A | 26-05-2010 |
| | | | DE | 102009044136 A1 | 08-04-2010 |
| | | | JP | 5528756 B2 | 25-06-2014 |
| | | | JP | 2010085083 A | 15-04-2010 |
| | | | US | 2010077759 A1 | 01-04-2010 |
| EP 1010945 | A2 | 21-06-2000 | EP | 1010945 A2 | 21-06-2000 |
| | | | JP | 4406127 B2 | 27-01-2010 |
| | | | JP | 2000193243 A | 14-07-2000 |
| | | | US | 6295801 B1 | 02-10-2001 |
| CN 104315541 | A | 28-01-2015 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 62323910 B